# EUROPÄISCHE PATENTSCHRIFT

(11) **EP 3 594 553 B1**
(45) Veröffentlichungstag und Bekanntmachung des Hinweises auf die Patenterteilung: **03.11.2021**
(21) Anmeldenummer: 19160172.3
(22) Anmeldetag: 01.03.2019
(51) Int. Cl.: F16P 3/12, F16P 3/08

(54) **VORRICHTUNG ZUR ÜBERWACHUNG EINES GEFAHRENBEREICHS**
DEVICE FOR MONITORING A HAZARDOUS AREA
DISPOSITIF DE SURVEILLANCE D'UNE ZONE DE DANGER

(30) Priorität: 10.07.2018 DE 202018103933 U
(43) Veröffentlichungstag der Anmeldung: 15.01.2020
(73) Patentinhaber: Leuze electronic GmbH + Co. KG, 73277 Owen/Teck (DE)
(72) Erfinder: Feller, Bernhard, 86316 Friedberg (DE); Rohbeck, Volker, 85244 Röhrmoos (DE); Jüttner, Andreas, 81543 München (DE); Haberer, Hermann, 81379 München (DE); Debus, Oliver, 86842 Türkheim, Wertach (DE); Bernhardt, Frank, 85716 Unterschleißheim (DE)
(74) Vertreter: Ruckh, Rainer Gerhard

(56) Entgegenhaltungen:
- US-A1- 2010 194 583

## Beschreibung

Die Erfindung betrifft eine Vorrichtung zur Überwachung eines Gefahrenbereiches einer Maschine oder Anlage, mit einer Sensoreinheit mit zumindest einem Strahlen emittierenden Sender und einem Strahlen empfangenden Empfänger zur Überwachung eines Schutzfeldes und zur Erfassung eines Objekts in zumindest einem ersten Schutzbereich des Schutzfeldes, und mit einer Auswerteeinheit, in welcher bei Erfassen eines Objektes im Schutzfeld als Sicherheitsfunktion ein Abschaltbefehl für die Maschine oder Anlage generiert wird, gemäß dem Oberbegriff von Anspruch 1.

Vorrichtungen zur Überwachung von Gefahrenbereichen an Maschinen oder Anlagen sind bekannt. Bei Maschinen insbesondere für die Serienproduktion von Bauteilen, wie etwa KFZ-Teilen in Umformverfahren, ist es erforderlich, Halbzeuge in Form von vorgestanzten Blechstücken der Maschine zuzuführen und das durch die Maschine, etwa eine Hochdruckpresse, bearbeitete Werkstück wieder zu entnehmen. Es sind also allgemein nicht sicherheitskritische Objekte einem Gefahrenbereich der Maschine zuzuführen und aus dem Gefahrenbereich wieder abzuführen.

Der Gefahrenbereich solcher Maschinen ist demnach mit einer Vorrichtung dahingehend zu überwachen, dass keine Personen oder allgemein, sicherheitskritische Objekte in Bezug auf die Maschine, hineingelangen können, während die Maschine in Funktion ist.

Eine derartige Vorrichtung zur Überwachung eines Gefahrenbereichs einer Maschine oder Anlage in Form eines Lichtgitters ist aus der DE 299 20 715 U1 bekannt. Das Lichtgitter umfasst hierbei eine Mehrfachanordnung von Lichtschranken. Wird mit diesem Lichtgitter ein sicherheitskritisches Objekt oder eine Person detektiert, wird in dem Lichtgitter eine Objektmeldung generiert, welche zum Abschalten der Maschine führt. Dadurch erfüllt das Lichtgitter eine Sicherheitsfunktion, da mit diesem erfasst wird, wenn sich eine Person in den Gefahrenbereich begibt, was zu einer Gefährdung der Person führen würde, wenn dann die Maschine oder Anlage eingeschaltet bliebe. Es sind weiterhin Schutzeinrichtungen an Gefahrenbereichen von Maschinen bekannt, die in der Art von flächigen, bewegbar gelagerten Sperrgittern oder pendelnd gelagerten Abweisern gebildet sind. Bewegt eine Person derartige Schutzeinrichtungen, so bewirken Schalter an der jeweiligen Lagerung der Sperrgitter oder Abweiser, dass die Maschine abgeschaltet wird.

Um beim Eintreten eines nicht sicherheitskritischen Objekts, z.B. eines von der Maschine etwa zu bearbeitenden Werkstücks in den Gefahrenbereich ein Abschalten der Maschine zu verhindern, ist bei dem Lichtgitter der DE 299 20 715 U1 zusätzlich zu der Lichtschrankenanordnung am Eingang bzw. Ausgang des Gefahrenbereichs eine Überbrückungseinheit in Form von sogenannten MutingSensoren vorgesehen, die eine Unterscheidung zwischen Personen oder allgemein sicherheitskritischen Objekten und zulässigen Gegenständen als nicht sicherheitskritische Objekte ermöglichen. Wird ein zulässiger Gegenstand detektiert, so erzeugen die Mutingsensoren ein Mutingsignal, das heißt ein Überbrückungssignal, das bewirkt, dass trotz einer Unterbrechung der Lichtschranken des Lichtgitters, die Abschaltfunktion vorübergehend deaktiviert ist und die Maschine nicht abgeschaltet wird. Wird hingegen eine der Lichtschranken unterbrochen und erzeugen die Mutingsensoren kein Überbrückungssignal, so wird die Maschine abgeschaltet.

Nachteilig bei den bekannten Vorrichtungen zur Überwachung eines Gefahrenbereiches sind die notwendige Vielzahl an Sensoren und auch unterschiedliche Bauformen, sowie deren Ansteuerung und Auswertung.

Die US 2010/0194583 A1 betrifft einen optischen Scanner, mit dem eine Schutzfeldüberwachung durchgeführt wird. Bei Erfassung eines Objekts in einem Schutzfeld wird ein Abschaltbefehl für eine zu überwachende Maschine generiert. Um unnötige Abschaltbefehle zu vermeiden ist eine Muting-Funktion vorgesehen. Dabei kann ein Benutzer ein partielles Muting generieren, in dem er mehrere Muting-Bereiche auswählt.

Der Erfindung liegt die Aufgabe zugrunde, eine Vorrichtung zur Überwachung eines Gefahrenbereiches einer Maschine anzugeben, mit welcher mit möglichst geringem Aufwand eine sichere Überwachung eines Gefahrenbereiches an einer Maschine durchführbar ist, ohne dabei die Verfügbarkeit der Maschine besonders einzuschränken.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Vorrichtung zur Überwachung eines Gefahrenbereichs einer Maschine oder Anlage, mit einer Sensoreinheit mit zumindest einem Strahlen emittierenden Sender und einem Strahlen empfangenden Empfänger zur Überwachung eines Schutzfeldes und zur Erfassung eines Objekts in zumindest einem ersten Schutzbereich des Schutzfeldes und mit einer Auswerteeinheit, in welcher bei Erfassen eines Objekts im Schutzfeld ein Abschaltbefehl für die Maschine oder Anlage als Sicherheitsfunktion generiert ist. Das Schutzfeld weist einen zweiten Schutzbereich auf, der von zugeordneten Strahlen oder Zusatzstrahlen des Senders überwacht ist wobei das Eindringen eines sicherheitskritischen Objekts in den zweiten Schutzbereich von der Sensoreinheit und der Auswerteeinheit erkannt und ein Abschaltbefehl für die Maschine oder Anlage generiert wird. Durch eine Überbrückungseinheit ist die Sicherheitsfunktion der Sensoreinheit in Bezug auf den ersten Schutzbereich überbrückbar, wenn ein nicht sicherheitskritisches Objekt in den ersten Schutzbereich gelangt. Die Sicherheitsfunktion in dem zweiten Schutzbereich ist nicht überbrückbar. Die Überbrückung des ersten Schutzbereichs wird aufgehoben, wenn im zweiten Schutzbereich ein Eindringen eines Objekts festgestellt wird.

Mit der erfindungsgemäßen Vorrichtung wird eine Gefahrenbereichsüberwachung für Anlagen und Maschinen realisiert, welche gefahrbringende Eingriffe sicher erkennt ohne dabei die Verfügbarkeit der Anlage unnötig einzuschränken. Generell wird mit der Sensoreinheit der erfindungsgemäßen Vorrichtung ein Schutzfeld überwacht, das zum Beispiel einen Zugang zur Maschine oder Anlage abdeckt.

Wesentlich hierbei ist, dass das Schutzfeld in einen ersten und zweiten Schutzbereich unterteilt ist, wobei der erste Schutzbereich mittels einer Überbrückungseinheit überbrückbar ist, jedoch der zweite Schutzbereich nicht überbrückbar ist.

Die Überbrückungseinheit stellt somit eine Muting-Funktion derart bereit, dass dann wenn nicht sicherheitskritische Objekte wie Transportgüter, die nicht zu Gefahrensituationen führen, das Schutzfeld passieren, die Vorrichtung keinen Abschaltbefehl für die Maschine oder Anlage generieren, wodurch unnötige Stillstandszeiten vermieden werden.

Mit dem zweiten Schutzbereich, der nicht überbrückbar ist, wird eine zusätzliche Sicherheitsfunktion realisiert, mit der insbesondere manipulative Objekteingriffe erfasst werden können. Da der zweite Schutzbereich nicht überbrückbar ist, führt ein Objekteingriff in den zweiten Schutzbereich stets zu einem Abschalten der Maschine oder Anlage, das heißt jedes Objekt im zweiten Schutzbereich wird als sicherheitskritisches Objekt klassifiziert.

Dabei ist es vorteilhaft, dass der erste und der zweite Schutzbereich so dimensioniert, dass ein oder mehrere nicht sicherheitskritische Objekte bei Passieren des Schutzfelds nur in den ersten, jedoch nicht in den zweiten Schutzbereich eindringen.

Da der erste Schutzbereich so dimensioniert ist, dass die nicht sicherheitskritischen Objekte nur in diesen Schutzbereich eindringen, kann für alle nicht sicherheitskritischen Objekte bei Passieren des Schutzfelds eine Muting-Funktion realisiert werden, die ein unnötiges Abschalten der Maschine oder Anlage verhindert.

Mit dem zweiten Schutzbereich werden manipulative Objekteingriffe erkannt, beispielsweise derart, dass eine Person auf einem ein nicht sicherheitskritisches Objekt bildenden Transportgut aufsitzt. Die Person ragt dann in den zweiten Schutzbereich. Dieser Objekteingriff führt zu einem Abschalten der Maschine oder Anlage, so dass Gefahrensituationen vermieden werden.

Erfindungsgemäß wird die Überbrückung des ersten Schutzbereichs aufgehoben, wenn im zweiten Schutzbereich ein Eindringen eines Objekts festgestellt wird.

Durch die Überwachung des zweiten Schutzbereichs wird somit eine weitere Sicherungsfunktion realisiert, dass bei Registrieren eines Objekts im zweiten Schutzbereich die Muting-Funktion sofort abgebrochen wird, damit keine unkontrollierten gefahrenbringende Objekteingriffe im ersten Schutzbereich zu Gefahrensituationen führen.

Vorteilhaft ist in der Vorrichtung eine Wiederanlaufsperre integriert, die aktiviert ist, wenn ein Eindringen eines Objekts im zweiten Schutzbereich festgestellt wird.

Die Wiederanlaufsperre wird auch dann aktiviert, wenn im ersten Schutzbereich ein sicherheitskritisches Objekt detektiert wird.

Durch Aktivieren der Wiederanlaufsperre erfolgt eine sichere Verriegelung der Maschine oder Anlage.

Vorteilhaft sind nach einem Abschaltbefehl der Auswerteeinheit die Maschine und die Überbrückungseinheit abgeschaltet und durch Betätigungen eines Wiederanlaufschalters einschaltbar.

Gemäß einer besonders vorteilhaften Ausgestaltung der Erfindung ist eine dem zweiten Schutzbereich zugeordnete bewegbare Schutzeinrichtung vorgesehen, wobei bei einer Bewegung der bewegbaren Schutzeinrichtung aus ihrer Ruhestellung diese in den zweiten Schutzbereich eingreift.

Dabei bildet die bewegbare Schutzeinrichtung ein mechanisches Schutzelement, das ein unkontrolliertes Eindringen von Objekten in den zweiten Schutzbereich verhindert.

Wesentlich ist, dass bei einem Objekteingriff auf die bewegbare Schutzeinrichtung diese in den zweiten Schutzbereich hinein bewegt wird, was von der Vorrichtung als Objekteingriff im zweiten Schutzbereich erkannt wird, was wiederum zu einem Abschalten der Maschine oder Anlage führt.

Dadurch wird eine weitere Sicherheitsfunktion bereitgestellt, mit der unzulässige Objekteingriffe in das Schutzfeld sicher erkannt werden.

Vorteilhaft hierbei ist insbesondere, dass durch eine Bewegung der beweglichen Schutzeinrichtung durch die Vorrichtung selbst die Wiederanlaufsperre aktiviert wird, das heißt es müssen hierfür keine zusätzlichen Sensoren oder Steuerungsmittel vorgesehen sein.

Gemäß einer konstruktiv vorteilhaften Ausgestaltung ist die bewegbare Schutzeinrichtung in der Art einer Pendeltüre gebildet, die zumindest in etwa einer parallel zu dem Schutzfeld liegenden Ebene angeordnet ist und in den zweiten Schutzbereich eindringbar gelagert ist.

Weiter vorteilhaft ist die Pendeltüre so gebildet, dass diese im Wesentlichen einen Flächenbereich des Schutzfeldes überdeckt, der von dem nicht sicherheitskritischen Objekt im ersten Schutzbereich freigelassen ist.

Somit werden mit der Pendeltüre nur sicherheitskritische Objekteingriffe erfasst.

Zur Vereinfachung des Aufbaues der Vorrichtung ist es vorteilhaft, wenn in dem Schutzfeld die Strahlen in dem ersten Schutzbereich und die Strahlen (Zusatzstrahlen) in dem zweiten Schutzbereich in einer Ebene liegen. Ein Sender und ein Empfänger oder mehrere Sender und mehrere Empfänger liegen dann sich so gegenüber, dass eine Strahlenebene aufgespannt wird, die das Schutzfeld überstreicht.

Eine strikte, funktionale Trennung des Aufbaues der jeweiligen Sensoreinheit sieht in einem bevorzugten Ausführungsbeispiel vor, dass mehrere Strahlen emittierende Sender und mehrere, diese Strahlen empfangenden Empfänger für den Aufbau des ersten Schutzbereichs vorgesehen sind. Wiederum sind für den Aufbau des zweiten Schutzbereiches mehrere Zusatzstrahlen emittierende Sender und mehrere die Zusatzstrahlen empfangende Empfänger vorgesehen, die sich an jeweiligen Rändern des betreffenden Schutzbereichs gegenüberliegen. Bevorzugt ist der von den betreffenden Sensoren gebildete Schutzbereich in der Art von Lichtvorhängen ausgebildet, wobei die Lichtstrahlen einzelne Strahlenachsen des Lichtvorhanges bilden. Die den jeweiligen Schutzbereichen zugeordneten Sensoren lassen sich bei diesem Aufbau der Vorrichtung besonders einfach überwachen.

Generell kann die Sensoreinheit auch von einem anderen optischen Sensor, einem Ultraschallsensor oder auch Radarsensor gebildet sein. Prinzipiell kann dabei der Sensor auch als scannender Sensor ausgebildet sein.

In einem bevorzugten Ausführungsbeispiel ist eine Überbrückungseinheit in der Art von Mutingsensoren vorgesehen, um eine Sicherheitsfunktion der Sensoreinheit in Bezug auf den ersten Schutzbereich überbrücken zu können, wenn ein nicht sicherheitskritisches Objekt, d.h. ein Objekt, welches von der Maschine bearbeitet werden soll, in den ersten Schutzbereich gelangt. Hingegen ist die Sicherheitsfunktion in dem zweiten Schutzbereich nicht überbrückbar.

In einem weiteren, bevorzugten Ausführungsbeispiel ist vorgesehen, dass in der Überbrückungseinheit zur Generierung eines sicheren Überbrückungssignals für den Sicherheitssensor eine Gleichzeitigkeitsüberwachung der von den Signalquellen der Überbrückungseinheit generierten Objektvorhandensignale durchgeführt wird, indem überwacht wird, ob nach Auftreten des Objektvorhandensignals einer ersten Signalquelle innerhalb eines bestimmten Zeitintervalls das Objektvorhandensignal der zweiten Signalquelle auftritt. Nur wenn diese Bedingung erfüllt ist, wird in der Überbrückungseinheit ein Überbrückungssignal generiert, mit dem die Sensoreinheit überbrückt wird, so dass während der Überbrückung ein Eindringen eines Objektes in das Schutzfeld der Sensoreinheit nicht zu einem Abschalten der Maschine führt.

Wird dagegen in der Überbrückungseinheit zwar das erste Objektvorhandensignal einer Signalquelle registriert, nicht jedoch innerhalb des Zeitintervalls das zweite Objektvorhandensignal der zweiten Signalquelle, so überführt das Überbrückungssignal den Vorrichtung in einen sicheren Verriegelungszustand, der ein Abschalten der Maschine zur Folge hat.

Ein wesentlicher Vorteil dieser konstruktiven Maßnahme besteht darin, dass bereits durch die Gleichzeitigkeitsüberwachung des Objektvorhandensignals die erforderliche Sicherheit des Überbrückungssignals erhalten wird. Das Zeitintervall innerhalb dessen die Objektvorhandensignale vorliegen und erkannt werden müssen, beträgt gemäß den Anforderungen der relevanten Sicherheitsnormen der EU höchstens 4 s.

Eine bevorzugte Ausführungsform der Vorrichtung zur Überwachung eines Gefahrenbereiches verwendet eine Sensoreinheit, mit einer Reihenanordnung von Strahlen, vorzugsweise Lichtstrahlen emittierenden Sendern, die mit einer Steuereinheit nacheinander, kaskadierend aktiviert werden. Ferner umfasst die Sensoreinheit eine Reihenanordnung von Strahlen, vorzugsweise Lichtstrahlen empfangende Empfänger, die der Reihenanordnung der Sender mit Abstand gegenüberliegend angeordnet ist, wobei sich dann zwischen Sendern und Empfängern das Schutzfeld aufspannt. Die räumliche Zusammenfassung der Komponenten der Sensoreinheit kann variantenreich gestaltet sein.

So können die Empfänger mit der ihnen zugeordneten Auswerteeinheit in einem Gehäuse angeordnet sein. Es kann auch vorteilhaft in Bezug auf die Wartungsfreundlichkeit oder die Funktionssicherheit der Vorrichtung vorteilhaft sein, die Auswerteeinheit für die Empfänger der Zusatzstrahlen, die dem zweiten Schutzbereich zugeordneten Empfänger also, in ein oder in mehreren separaten Gehäusen anzuordnen, wobei Informationen in der Auswerteeinheit in Abhängigkeit von der gewählten Gehäuseanordnung leitungsgebunden (elektrisch) oder über eine Funkstrecke elektromagnetisch übertragen sein können.

In selber Weise können die Sender, die Zusatzstrahlen zur Darstellung des zweiten Schutzbereiches emittieren, in ein oder mehreren Gehäusen angeordnet sein und die Ansteuerung der Sender kann über gehäuseexterne, elektrische oder elektromagnetische Schnittstellen (Funk) erfolgen.

Um beispielsweise der Möglichkeit der Störung des Betriebes der Auswerteeinheit etwa durch elektromagnetische Felder auszuschließen, kann es vorteilhaft sein, die Auswerteinheit in einem externen, von der Schutzeinrichtung getrennten Gehäuse anzuordnen und Informationen zwischen der Auswerteinheit und der Schutzeinrichtung über serielle oder elektromagnetische oder sonstige Schnittstellen der Elektronik oder Optoelektronik auszutauschen.

Gemäß einer weiteren Variante weist die Auswerteeinheit eine Logik für die Empfänger der Zusatzstrahlen auf, die in einem weiteren Gehäuse angeordnet ist. Informationen sind zwischen der Logik und der restlichen Auswerteeinheit leitungsgebunden oder über elektromagnetische Übertragung ausgetauscht.

Insgesamt ist vorteilhaft die Steuerung der Vorrichtung zur Überwachung eines Gefahrenbereichs einer Maschine oder Anlage selbstüberwachend auszulegen.

Die Erfindung wird im Folgenden anhand der Zeichnung erklärt. Es zeigen:
- Fig. 1: eine schematische Frontansicht einer Maschine mit einer Vorrichtung zur Überwachung eines Gefahrenbereichs, wobei der Eingang in den Gefahrenbereich gezeigt ist,
- Fig. 2: eine schematische Draufsicht der Maschine in Fig. 1,
- Fig. 3: eine weitere schematische Frontansicht einer Maschine mit einem weiteren Ausführungsbeispiel einer Vorrichtung zur Überwachung eines Gefahrenbereichs,
- Fig. 4: ein weiteres Ausführungsbeispiel einer Maschine mit einer Vorrichtung zur Überwachung eines Gefahrenbereichs in einer schematischen Frontansicht.

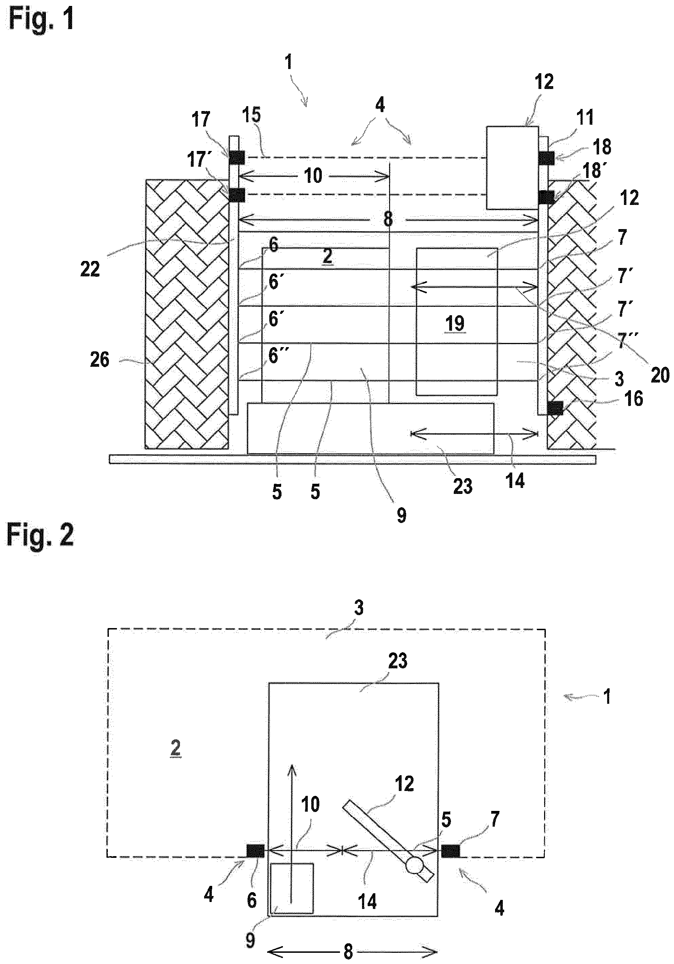

In Fig. 1 ist in einer schematischen Frontansicht eine Vorrichtung 1 zur Überwachung eines Gefahrenbereichs 2 einer Maschine 3, wie etwa einer Hochdruck-Exzenterpresse zur Herstellung von Karosserieteilen gezeigt. Die Vorrichtung 1 umfasst eine Sensoreinheit 4 mit einem Lichtvorhang vor dem Gefahrenbereich 2. Hierzu sind vertikal übereinander angeordnete Sender 6, 6' 6" zur Emission von Strahlen 5 vorgesehen. Die Sender 6, 6', 6" werden zyklisch nacheinander von einer nicht gezeigten Steuereinrichtung aktiviert und senden während des Betriebs der Maschine 3 fortlaufend Strahlen 5. Zum Empfang der Strahlen 5 sind Empfänger 7, 7', 7" vorgesehen die den Sendern 6, 6', 6" ebenfalls vertikal übereinander angeordnet, mit einem Abstand in der Breite eines Schutzfeldes 8 gegenüberliegen. Die Signale, insbesondere die Objektvorhandensignale der Empfänger 7, 7', 7", werden von einer schematisch dargestellten Auswerteeinheit 11 ermittelt. Die Auswerteeinheit 11 kann den Betrieb der Empfänger 7, 7', 7" steuern, Die Auswerteinheit 11 weist vorzugsweise einen redundanten Aufbau auf und besteht aus zwei, in einem Selbstüberwachungsmodus arbeitenden Mikrocontrollern als wesentliche Bestandteile. Die Auswerteinheit 11 ist mit den Empfängern 7, 7', 7" in einem Gehäuse 21 angeordnet. Es ist gleichwohl mögliche, dass die Auswerteeinheit 11 in einem, von den Empfängern 7, 7', 7" separierten Gehäuse untergebracht ist. Jedem Sender 6, 6', 6" ist ein Empfänger 7, 7', 7" zugeordnet und die Strahlen 5 überdecken so in horizontaler Anordnung ihrer Strahlenachsen das Schutzfeld 8. Die in einer Ebene liegenden Strahlenachsen des so gebildeten Lichtgitters bilden die Sensoreinheit 4 zur Überwachung des Schutzfeldes. Bei einem Eingriff eines Objektes 9, hier eines nicht sicherheitskritischen Objektes in Form eines Blech-Halbzeuges, das auf einem Förderband 23 zu der Maschine 3 gefahren wird, wird der Strahlengang der Strahlen 5 wenigstens eines Senders 6 unterbrochen.

In der Auswerteinheit wird in Abhängigkeit der Signale der Sensoreinheit 4 ein fehlersicheres Schaltsignal generiert, dessen Schaltzustände angeben, ob sich ein Objekt im Schutzfeld 8 befindet oder nicht und demgemäß die Maschine 3 gestoppt und in einen sicheren Verriegelungszustand gebracht oder frei betrieben. Mit der Vorrichtung 1 wird somit sicher verhindert, dass Personen oder allgemein sicherheitskritische Objekte, in den Gefahrenbereich 2 gelangen. Um jedoch zwischen einem nicht sicherheitskritischen Objekt, welches zu der Maschine 3 transportiert werden soll und einem sicherheitskritischen Objekt, etwa einer Person oder einem Fremdkörper, unterscheiden zu können und damit die Maschine 3 nicht unnötig außer Betrieb zu setzen, ist eine Überbrückungseinheit 16 vorgesehen, die bei den gezeigten Ausführungsbeispielen in den Figuren 1 bis 4 in der Sensoreinheit 4 und dem Lichtvorhang integriert ist. Die Überbrückungseinheit 16 weist einen redundanten Aufbau auf und besteht aus zumindest zwei zyklisch sich überwachenden Recheneinheiten. Dabei wird bei Eintreten eines nicht sicherheitskritischen Objektes 9, also eines zu verarbeitenden Werkstückes beispielsweise, ein Überbrückungssignal generiert, das die Sicherheitsfunktion des Lichtvorhanges überbrückt. Die Maschine 3 wird dann nicht stillgesetzt. Wird hingegen von der Überbrückungseinheit 16 kein Überbrückungssignal generiert, so ist die Sicherheitsfunktion der Vorrichtung 1 aktiviert und die Maschine 3 wird bei Erkennen eines Objektes 9 stillgesetzt.

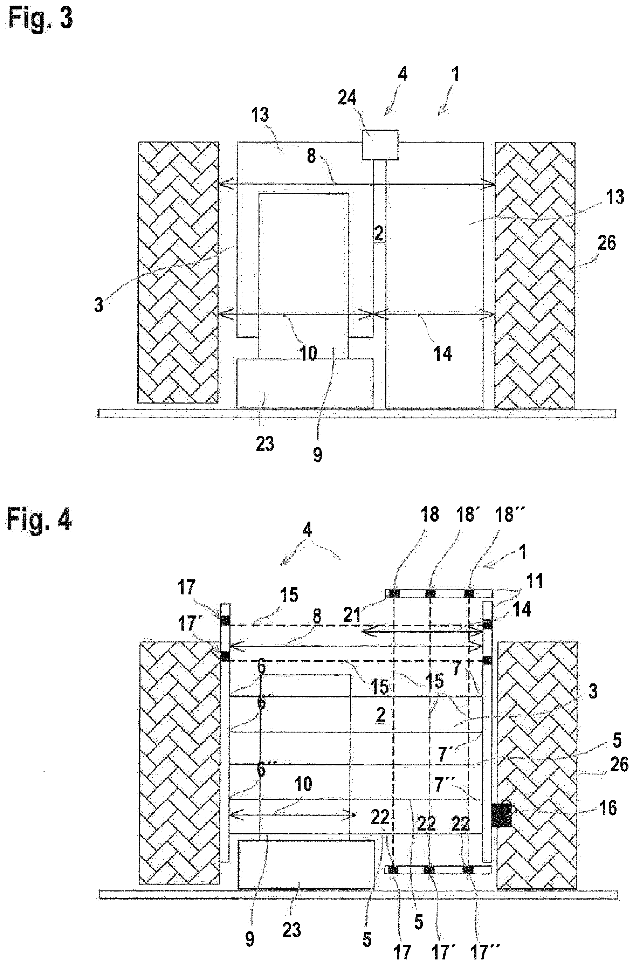

Die Überbrückung der Sicherheitsfunktion erfolgt in der Überbrückungseinheit 16 in Abhängigkeit der Signale zweier Signalquellen (Empfänger), wobei eine Signalquelle vorzugsweise in dem Lichtvorhang oder Schutzfeld 8 integriert und die andere außerhalb des Schutzfeldes angeordnet sein kann. In dem in Fig. 3 gezeigten Ausführungsbeispiel übernimmt ein Scanner 24 alle erwähnten Funktionen.

Wie in allen gezeigten Ausführungsbeispielen offenbart, ist das Schutzfeld 8 in einen ersten Schutzbereich 10, auf den die bisherigen Ausführungen zutreffen, und in einen zweiten Schutzbereich 14 unterteilt. Nur der erste Schutzbereich 10 kann mit der Überbrückungseinheit überbrückt werden. Der zweite Schutzbereich 14 betrifft insbesondere den Zwischenraum 13, der zwischen dem Objekt 9 und den äußeren Rändern oder zumindest einem äußeren Rand des Schutzfeldes 8 liegt. Der zweite Schutzbereich 14 wird in den in den Figuren 1, 2 und 3 gezeigten Ausführungsbeispielen von Strahlen oder Zusatzstrahlen 15 des Senders 6 oder ausgewählter Sender 6" der Sensoreinheit 4 überstrichen. Den Sendern 6" sind Empfänger 7" zugeordnet. Der erste und zweite Schutzbereich 10, 14 liegen in einer Ebene, können aber auch, wie das Ausführungsbeispiel 4 zeigt, in zwei Ebenen, die vorzugsweise gering beabstandet zueinander sind, liegen.

Mit dem zweiten Schutzbereich 14 bzw. dem diesen überstreichenden Lichtvorhang, der von der Überbrückungseinheit 16 nicht überbrückbar ist, kann ein Eindringen eines sicherheitskritischen Objekts 12 von der Sensoreinheit 4 und der Auswerteeinheit 11 erkannt werden und ein Abschaltbefehl für die Maschine 3 generiert werden. Die Sicherheitsfunktion des zweiten Schutzbereiches 14 ist in der Lage, die Sicherheitsfunktion des ersten Schutzbereiches 10 und die Überbrückungseinheit 16 zu übersteuern.

Wenn beispielsweise eine Person in dem zweiten Schutzbereich 14 detektiert wird, so wird von der Auswerteeinheit 11 ein Abschaltbefehl für die Maschine 3 generiert und die Maschine in einen sicheren, abgeschalteten Zustand überführt. Eine eventuell detektierte Überbrückung des ersten Schutzbereichs 10 wird deaktiviert.

Bei dem in den Figuren 1 und 2 gezeigten Ausführungsbeispiel ist eine in den zweiten Schutzbereich 14 hinein bewegbare Schutzeinrichtung 12 vorgesehen, die das sicherheitskritische Objekt 12 verkörpert und etwa von einer Person in den oberen Teil des Lichtvorhanges eingeschwenkt werden kann (vgl. Fig. 1).

Die zur Darstellung des zweiten Schutzbereichs 14 angewandten Zusatzstrahlen 15 werden von Sendern 17, 17', 17" emittiert (vgl. Fig. 1 oben, Fig. 4 unten) und von zugeordneten Empfängern 18, 18', 18" in Gehäusen 21 detektiert.

In dem in Fig. 1 gezeigten Ausführungsbeispiel ist die Schutzeinrichtung 12 in Form einer Pendeltür 19 gebildet, die in einer parallel zu dem Schutzfeld 8 liegenden Ebene angeordnet ist und in den Lichtvorhang des zweiten Schutzbereichs 14 eindringen kann. Die Pendeltür 19 weist dazu eine Fläche auf, die drehsteif mit der eigentlichen Pendeltüre 19 verbunden ist und bei deren Ausschwenken die Lichtstrahlen oder Zusatzstrahlen 15 unterbrochen werden.

Zur sicheren Betätigung der Pendeltüre 19 erstreckt sich diese über einen Flächenbereich 20 des Schutzfeldes 8, der von dem Objekt 9 freigelassen ist.

Durch die Erfindung ist somit die Funktionalität der Vorrichtung 1 aufgeteilt in zumindest zwei Bereiche, einen ersten Schutzbereich 10, der für die Passagen von sicherheitskritischen und nicht sicherheitskritischen Objekten 9 geeignet und vorgesehen ist und einen zweiten Schutzbereich 14, der verhindert, dass ein sicherheitskritisches Objekt, etwa eine Person, neben oder unter oder über dem Objekt 9 in den Gefahrenbereich 2 gelangen kann.

Anstelle der Pendeltüre 19 sieht die in Fig. 4 gezeigte Ausführungsform einen zweiten Schutzbereich 14 vor, der von Strahlen 15 aus Sendern 17, 17', 17" in Gehäusen 22 gebildet wird, die senkrecht oder quer zu den Strahlen 5 aus Sendern 6, 6', 6" für den ersten Schutzbereich 10 verlaufen.

Bei dem in Fig. 3 gezeigten Ausführungsbeispiel übernimmt ein Scanner 24 alle Sicherungsfunktionen für den ersten und zweiten Schutzbereich 10, 14.

Die übrige Absicherung der Maschine 3 kann durch einen, diesen umgebenden Schutzzaun 26 erfolgen. Für gleiche Bauteile gelten im Übrigen in den Fig. 1 bis 4 dieselben Bezugszeichen.

### Bezugszeichenliste

- (1): Vorrichtung
- (2): Gefahrenbereich
- (3): Maschine
- (4): Sensoreinheit
- (5): Strahl
- (6): Sender (6', 6")
- (7): Empfänger (7', 7")
- (8): Schutzfeld
- (9): Objekt
- (10): Schutzbereich, erster
- (11): Auswerteeinheit
- (12): Schutzeinrichtung, bewegbar
- (13): Zwischenraum
- (14): Schutzbereich, zweiter
- (15): Strahl, Zusatzstrahl
- (16): Überbrückungseinheit
- (17): Sender (17', 17")
- (18): Empfänger (18', 18")
- (19): Pendeltüre
- (20): Flächenbereich
- (21): Gehäuse
- (22): Gehäuse
- (23): Förderband
- (24): Scanner
- (25): Fläche, v. 19
- (26): Schutzzaun

## Patentansprüche

1. Vorrichtung (1) zur Überwachung eines Gefahrenbereiches (2) einer Maschine (3) oder Anlage, mit einer Sensoreinheit (4) mit zumindest einem Strahlen (5) emittierenden Sender (6) und einem Strahlen (5) empfangenden Empfänger (7) zur Überwachung eines Schutzfeldes (8) und zur Erfassung eines Objekts (9) in zumindest einem ersten Schutzbereich (10) des Schutzfeldes (8), mit einer Auswerteeinheit (11), in welcher bei Erfassen eines Objekts (9) im Schutzfeld (8) als Sicherheitsfunktion ein Abschaltbefehl für die Maschine (3) oder Anlage generiert ist, wobei das Schutzfeld (8) einen zweiten Schutzbereich (14) aufweist, der von zugeordneten Strahlen (15) oder Zusatzstrahlen des Senders (6) überwacht ist und wobei ein Eindringen eines sicherheitskritischen Objekts (12) in den zweiten Schutzbereich (14) von der Sensoreinheit (4) und der Auswerteeinheit (11) erkannt und ein Abschaltbefehl für die Maschine (3) oder Anlage generiert ist, wobei durch eine Überbrückungseinheit (16) die Sicherheitsfunktion der Sensoreinheit (4)in Bezug auf den ersten Schutzbereich (10) überbrückbar ist, wenn ein nicht sicherheitskritisches Objekt (9) in den ersten Schutzbereich (10) gelangt, und **dadurch gekennzeichnet, dass** die Sicherheitsfunktion in dem zweiten Schutzbereich (14) nicht überbrückbar ist und dass die Überbrückung des ersten Schutzbereichs (10) aufgehoben wird, wenn im zweiten Schutzbereich (14) ein Eindringen eines Objekts festgestellt wird.

2. Vorrichtung (1) nach Anspruch 1, **dadurch gekennzeichnet, dass** der erste und zweite Schutzbereich (14) so dimensioniert sind, dass ein oder mehrere nicht sicherheitskritische Objekte bei Passieren des Schutzfelds (8) nur in den ersten, jedoch nicht in den zweiten Schutzbereich (14) eindringen.

3. Vorrichtung (1) nach einem der Ansprüche 1 oder 2, **dadurch gekennzeichnet, dass** in dieser eine Wiederanlaufsperre integriert ist, die aktiviert ist, wenn ein Eindringen eines Objekts im zweiten Schutzbereich (14) festgestellt wird.

4. Vorrichtung (1) nach Anspruch 3, **dadurch gekennzeichnet, dass** nach einem Abschaltbefehl der Auswerteeinheit (11) die Maschine (3) und die Überbrückungseinheit (16) abgeschaltet ist und durch Bestätigungen eines Wiederanlaufschalters einschaltbar ist.

5. Vorrichtung nach einem der Ansprüche 1 - 4, **dadurch gekennzeichnet, dass** eine dem zweiten Schutzbereich (14) zugeordnete bewegbare Schutzeinrichtung vorgesehen ist, wobei bei einer Bewegung der bewegbaren Schutzeinrichtung aus ihrer Ruhestellung diese in den zweiten Schutzbereich (14) eingreift.

6. Vorrichtung (1) nach Anspruch 5, **dadurch gekennzeichnet, dass** die bewegbare Schutzeinrichtung ein mechanisches Schutzelement bildet, das ein unkontrolliertes Eindringen von Objekten in den zweiten Schutzbereich (14) verhindert.

7. Vorrichtung (1) nach einem der Ansprüche 5 oder 6, **dadurch gekennzeichnet, dass** die bewegbare Schutzeinrichtung (12) in der Art einer Pendeltüre (19) gebildet ist, die zumindest in etwa einer parallel zu dem Schutzfeld (8) liegenden Ebene angeordnet ist und in den zweiten Schutzbereich (14) eindringbar gelagert ist.

8. Vorrichtung (1) nach einem der Ansprüche 5 bis 7, **dadurch gekennzeichnet, dass** die Pendeltüre (19) so gebildet ist, dass diese im Wesentlichen einen Flächenbereich (20) des Schutzfeldes (8) überdeckt, der von dem nicht sicherheitskritischen Objekt (9) im ersten Schutzbereich (10) freigelassen ist.

9. Vorrichtung (1) nach Anspruch 1, **dadurch gekennzeichnet, dass** die Sensoreinheit (4) ein optischer Sensor, ein Ultraschallsensor oder ein Radarsensor ist.

10. Vorrichtung (1) nach Anspruch 9, **dadurch gekennzeichnet, dass** die Sensoreinheit (4) ein scannender Sensor ist.

11. Vorrichtung (1) nach Anspruch 9, **dadurch gekennzeichnet, dass** die Sensoreinheit (4) ein Lichtvorhang ist.

12. Vorrichtung (1) nach Anspruch 11, **dadurch gekennzeichnet, dass** in dem Schutzfeld (8) die Strahlen (5) in dem ersten Schutzbereich (10) und die Strahlen (15) in dem zweiten Schutzbereich (14) in einer Ebene liegen.

13. Vorrichtung (1) nach einem der Ansprüche 1 - 12, **dadurch gekennzeichnet, dass** der oder die Strahlen (5, 15) empfangenden Empfänger (7, 7', 7", 18, 18', 18") mit der Auswerteeinheit (11) in einem Gehäuse (21) angeordnet sind.

14. Vorrichtung (1) nach einem der Ansprüche 1 - 12, **dadurch gekennzeichnet, dass** die Auswerteeinheit (11) eine Logik für die Empfänger (18, 18', 18") der Zusatzstrahlen (15) aufweist, die in einem weiteren Gehäuse (22) angeordnet ist, und dass Informationen zwischen der Logik und der restlichen Auswerteeinheit (11) leitungsgebunden oder über elektromagnetische Übertragung ausgetauscht sind.

15. Vorrichtung (1) nach einem der Ansprüche 1 - 14, **dadurch gekennzeichnet, dass** die Sender (17, 17', 17") für Strahlen (5) und Zusatzstrahlen (15) in mehreren Gehäusen (22) angeordnet sind und Informationen, wobei diese für einen Datenaustausch zugeordnet sind.

16. Vorrichtung (1) nach einem der Ansprüche 1 - 15, **dadurch gekennzeichnet, dass** die Auswerteeinheit (11) in einem externen, von der Sensoreinheit (4) getrennten Gehäuse (22) angeordnet ist und Informationen zwischen der Auswerteeinheit (11) und der Sensoreinheit (4) über serielle oder elektromagnetische Schnittstellen ausgetauscht sind.

## Claims

1. A device (1) for monitoring a hazardous area (2) of a machine (3) or installation, having a sensor unit (4) with at least one transmitter (6) emitting beams (5) and a receiver (7) receiving beams (5) for monitoring a protective field (8) and for detecting an object (9) in at least one first protective area (10) of the protective field (8), having an evaluation unit (11) in which, when an object (9) is detected the protective field (8), a switch-off command for the machine (3) or installation is generated as a safety function, the protective field (8) having a second protective area (14) which is monitored by assigned beams (15) or additional beams of the transmitter (6) and wherein an intrusion of a safety-critical object (12) into the second protective area (14) is detected by the sensor unit (4) and the evaluation unit (11) and a shutdown command for the machine (3) or installation is generated, wherein the safety function of the sensor unit (4) with respect to the first protective area (10) can be bridged by a bridging unit (16), if a non-safety-critical object (9) enters the first protected area (10), and **characterised in that** the safety function cannot be bypassed in the second protected area (14), and **in that** the bypassing of the first protected area (10) is cancelled if an intrusion of an object is detected in the second protected area (14).

2. The device (1) according to claim 1, **characterised in that** the first and second protective areas (14) are dimensioned in such a way that one or more non-safety-critical objects penetrate only into the first, but not into the second protective area (14) when passing through the protective field (8).

3. The device (1) according to one of claims 1 or 2, **characterised in that** a restart interlock is integrated therein, which is activated when an intrusion of an object is detected in the second protection area (14).

4. The device (1) according to claim 3, **characterised in that** after a switch-off command of the evaluation unit (11) the machine (3) and the bridging unit (16) are switched off and can be switched on by confirmations of a restart switch.

5. An apparatus according to any one of claims 1-4, **characterised in that** a movable protective device associated with the second protective region (14) is provided, wherein upon movement of the movable protective device from its rest position, the movable protective device engages the second protective region (14).

6. The device (1) according to claim 5, **characterised in that** the movable protection device forms a mechanical protection element preventing uncontrolled penetration of objects into the second protection area (14).

7. The device (1) according to one of claims 5 or 6, **characterised in that** the movable protective device (12) is formed in the manner of a swing door (19) which is arranged at least approximately in a plane lying parallel to the protective field (8) and is mounted such that it can penetrate into the second protective region (14).

8. The device (1) according to any one of claims 5 to 7, **characterised in that** the swing door (19) is formed in such a way that it substantially covers an area (20) of the protective field (8) which is left free by the non-safety-critical object (9) in the first protective region (10).

9. The device (1) according to claim 1, **characterised in that** the sensor unit (4) is an optical sensor, an ultrasonic sensor or a radar sensor.

10. The device (1) according to claim 9, **characterised in that** the sensor unit (4) is a scanning sensor.

11. The device (1) according to claim 9, **characterised in that** the sensor unit (4) is a light curtain.

12. The device (1) according to claim 11, **characterised in that**, in the protection field (8), the beams (5) in the first protection area (10) and the beams (15) in the second protection area (14) lie in a plane.

13. The device (1) according to one of the claims 1-12, **characterised in that** the receiver or receivers (7, 7', 7", 18, 18', 18") receiving beams (5, 15) are arranged with the evaluation unit (11) in a housing (21).

14. The device (1) according to one of the claims 1-12, **characterised in that** the evaluation unit (11) has a logic for the receivers (18, 18', 18") of the additional beams (15), which logic is arranged in a further housing (22), and **in that** information is exchanged between the logic and the remaining evaluation unit (11) by wire or via electromagnetic transmission.

15. The device (1) according to any one of claims 1-14, **characterised in that** the transmitters (17, 17' 17") for beams (5) and additional beams (15) are arranged in a plurality of housings (22) and information, these being associated for data exchange.

16. The device (1) according to any one of claims 1-15, **characterised in that** the evaluation unit (11) is arranged in an external housing (22) separate from the sensor unit (4), and information is exchanged between the evaluation unit (11) and the sensor unit (4) via serial or electromagnetic interfaces.

## Revendications

1. Dispositif (1) pour surveiller une zone de danger (2) d'une machine (3) ou d'une installation, comportant une unité de détection (4) avec au moins un émetteur (6) émettant des rayons (5) et un récepteur (7) recevant des rayons (5) pour surveiller un champ de protection (8) et pour détecter un objet (9) dans au moins une première zone de protection (10) du champ de protection (8), avec une unité d'évaluation (11) dans laquelle, en cas de détection d'un objet (9) dans le champ de protection (8), une commande d'arrêt pour la machine (3) ou l'installation est générée en tant que fonction de sécurité, le champ de protection (8) présentant une seconde zone de protection (14) qui est surveillée par des rayons associés (15) ou des rayons supplémentaires de l'émetteur (6) et dans lequel une intrusion d'un objet (12) critique pour la sécurité dans la seconde zone de protection (14) est détectée par l'unité de détection (4) et l'unité d'évaluation (11) et une commande d'arrêt pour la machine (3) ou l'installation est générée, la fonction de sécurité de l'unité de détection (4) par rapport à la première zone de protection (10) pouvant être pontée par une unité de pontage (16) lorsqu'un objet (9) non critique pour la sécurité pénètre dans la première zone de protection (10), et **caractérisé en ce que** la fonction de sécurité ne peut pas être contournée dans la seconde zone de protection (14), et **en ce que** le contournement de la première zone de protection (10) est annulé lorsqu'une intrusion d'un objet est détectée dans la seconde zone de protection (14).

2. Dispositif (1) selon la revendication 1, **caractérisé en ce que** la première et la seconde zone de protection (14) sont dimensionnées de telle sorte qu'un ou plusieurs objets non critiques pour la sécurité ne pénètrent que dans la première, mais pas dans la seconde zone de protection (14) lors du passage à travers le champ de protection (8).

3. Dispositif (1) selon l'une des revendications 1 ou 2, **caractérisé en ce qu'**il intègre un verrouillage de redémarrage qui est activé lorsqu'une intrusion d'un objet est détectée dans la seconde zone de protection (14) .

4. Dispositif (1) selon la revendication 3, **caractérisé en ce qu'**après une commande d'arrêt de l'unité d'évaluation (11), la machine (3) et l'unité de pontage (16) sont arrêtées et peuvent être remises en marche par des confirmations d'un interrupteur de redémarrage.

5. Appareil selon l'une quelconque des revendications 1 à 4, **caractérisé en ce qu'**un dispositif de protection mobile associé à la seconde région de protection (14) est prévu, dans lequel, lors du mouvement du dispositif de protection mobile à partir de sa position de repos, le dispositif de protection mobile engage la seconde région de protection (14).

6. Dispositif (1) selon la revendication 5, **caractérisé en ce que** le dispositif de protection mobile forme un élément de protection mécanique empêchant la pénétration incontrôlée d'objets dans la seconde zone de protection (14).

7. Dispositif (1) selon l'une des revendications 5 ou 6, **caractérisé en ce que** le dispositif de protection mobile (12) est réalisé à la manière d'une porte battante (19) qui est disposée au moins approximativement dans un plan parallèle au champ de protection (8) et est montée de manière à pouvoir pénétrer dans la seconde zone de protection (14).

8. Dispositif (1) selon l'une quelconque des revendications 5 à 7, **caractérisé en ce que** la porte battante (19) est formée de telle sorte qu'elle recouvre sensiblement une zone (20) du champ de protection (8) laissée libre par l'objet non critique pour la sécurité (9) dans la première zone de protection (10).

9. Dispositif (1) selon la revendication 1, **caractérisé en ce que** l'unité de détection (4) est un capteur optique, un capteur à ultrasons ou un capteur radar.

10. Dispositif (1) selon la revendication 9, **caractérisé en ce que** l'unité de détection (4) est un capteur de balayage.

11. Dispositif (1) selon la revendication 9, **caractérisé en ce que** l'unité de détection (4) est un rideau lumineux.

12. Dispositif (1) selon la revendication 11, **caractérisé en ce que**, dans le champ de protection (8), les faisceaux (5) de la première zone de protection (10) et les faisceaux (15) de la seconde zone de protection (14) sont situés dans un plan.

13. Dispositif (1) selon l'une des revendications 1-12, **caractérisé en ce que** le ou les récepteurs (7, 7', 7", 18, 18', 18") recevant les faisceaux (5, 15) sont disposés avec l'unité d'évaluation (11) dans un boîtier (21).

14. Dispositif (1) selon l'une des revendications 1 à 12, **caractérisé en ce que** l'unité d'évaluation (11) présente une logique pour les récepteurs (18, 18', 18") des rayons supplémentaires (15), laquelle logique est disposée dans un autre boîtier (22), et **en ce que** l'échange d'informations entre la logique et le reste de l'unité d'évaluation (11) se fait par fil ou par transmission électromagnétique.

15. Dispositif (1) selon l'une quelconque des revendications 1 à 14, **caractérisé en ce que** les émetteurs (17, 17', 17") de faisceaux (5) et de faisceaux supplémentaires (15) sont disposés dans une pluralité de boîtiers (22) et d'informations, ceux-ci étant associés pour l'échange de données.

16. Dispositif (1) selon l'une quelconque des revendications 1 à 15, **caractérisé en ce que** l'unité d'évaluation (11) est disposée dans un boîtier externe (22) distinct de l'unité de détection (4), et les informations sont échangées entre l'unité d'évaluation (11) et l'unité de détection (4) par l'intermédiaire d'interfaces série ou électromagnétiques.
